# EUROPEAN PATENT APPLICATION

(11) **EP 4 763 818 A1**
(43) Date of publication of application: **24.06.2026**
(21) Application number: 24864736.4
(22) Date of filing: 13.09.2024
(51) Int. Cl.: C03C 17/36, C03C 27/12, B60J 7/00, B60J 3/00, B32B 17/10, B32B 27/30, B32B 33/00, B32B 7/12

(54) **COATED GLASS AND LAMINATED GLASS**

(30) Priority: 14.09.2023 CN 202311187227
(71) Applicant: Fujian Wanda Automobile Glass Industry Co., Ltd., Fuqing Fuzhou, Fujian 350300 (CN)
(72) Inventor: LU, Yuemin, Fuzhou, Fujian 350300 (CN); LIN, Zhu, Fuzhou, Fujian 350300 (CN); HE, Weilong, Fuzhou, Fujian 350300 (CN); ZHANG, Canzhong, Fuzhou, Fujian 350300 (CN)
(74) Representative: Delbarba, Andrea
(86) International application number: PCT/CN2024/118730
(87) International publication number: WO 2025/056022

(57) **Abstract**

The present application relates to coated glass and laminated glass. The coated glass (100) comprises a first glass plate (110) and a low-emissivity laminate (120) arranged on at least one surface of the first glass plate (110), wherein the low-emissivity laminate (120) comprises at least one transparent conductive oxide layer (122) and at least one visible light blocking layer arranged on the side of the at least one transparent conductive oxide layer (122) away from the first glass plate (110), the total physical thickness of the at least one visible light blocking layer being greater than 10nm; and the visible light transmittance of the first glass plate (110) is TL1, the visible light transmittance of the coated glass (100) is TL2, and TL1 and TL2 satisfy TL2/TL1 ≤ 0.4.

## Description

### RELATED APPLICATIONS

This application claims priority to Chinese patent application No. 2023111872277 entitled "COATED GLASS AND LAMINATED GLASS", filed on September 14, 2023, the content of which is hereby incorporated by reference in its entirety.

### TECHNICAL FIELD

The present application relates to the glass field, and in particular, to a coated glass and a laminated glass.

### BACKGROUND

More and more automobile companies seek to eliminate sunroof sunshades to increase interior space and reduce vehicle weight and manufacturing costs. Without a sunshade, conventional sunroof glass admits excessive light into the vehicle, which not only affects the visual sensory experience of passengers but also increases the interior temperature, affecting thermal comfort inside the vehicle. To reduce the visible light transmittance and improve the thermal insulation performance of sunroof glass, conventional technology employs a laminated glass as the sunroof glass and adopts colored PVB as an adhesive layer of the laminated glass, or even integrates light-adjusting elements within the laminated glass, which however significantly increases the manufacturing cost of the sunroof glass.

Furthermore, sunroof glass requires to possess not only low visible light transmittance but also low emissivity. For example, adding a low-emissivity coating on the interior-side surface of the sunroof glass can reduce the emissivity of the interior side of the sunroof glass from about 0.9 to 0.3 or below, thereby improving thermal insulation. An ordinary low-emissivity coating can reduce the emissivity of the sunroof glass, but it increases the visible light reflectance on the interior side of the sunroof glass, which forms clear mirror reflections of passengers and interior objects including the center console display or other electronic device displays on the sunroof glass, causing visual interference for passengers, especially for rear-seat passengers, and eye discomfort. In some cases, when passengers use electronic devices like mobile phones inside the vehicle, the content from these devices may be clearly reflected onto the sunroof glass and thereby become visible to other passengers, compromising privacy.

### SUMMARY

In view of this, embodiments of the present application provide a coated glass and a laminated glass.

In a first aspect, the present application provides a coated glass including a first glass sheet and a low-emissivity coating disposed on at least one surface of the first glass sheet, wherein the low-emissivity coating includes at least one transparent conductive oxide layer and at least one visible light blocking layer, the at least one visible light blocking layer is disposed on a side of the at least one transparent conductive oxide layer away from the first glass sheet, and a total physical thickness of the at least one visible light blocking layer is greater than 10 nm;

a visible light transmittance of the first glass sheet is TL1, a visible light transmittance of the coated glass is TL2, and TL1 and TL2 satisfy that TL2/TL1 is equal to or less than 0.4.

A visible light reflectance RL1 of the coated glass on a side where the low-emissivity coating is disposed is less than 6%.

A visible light reflectance RL1 of the coated glass on the side where the low-emissivity coating is disposed is equal to or less than 5%.

A visible light reflectance RL1 of the coated glass on the side where the low-emissivity coating is disposed is equal to or less than 4%.

A visible light reflectance RL1 of the coated glass on the side where the low-emissivity coating is disposed is equal to or less than 3%.

A material of the visible light blocking layer is one or more selected from the group consisting of Ni, Cr, Ti, Nb, Mo, Si, Zr, and W.

A material of the transparent conductive oxide layer is at least one selected from the group consisting of doped zinc oxide, indium tin oxide, chromium-doped nickel oxide, fluorine-doped tin oxide, and zinc tin oxide, wherein the doped zinc oxide is zinc oxide doped with at least one element selected from the group consisting of aluminum, tungsten, hafnium, gallium, yttrium, niobium, and neodymium.

A thickness of the transparent conductive oxide layer is in a range from 80 nm to 500 nm.

An emissivity of the coated glass on a side where the low-emissivity coating is disposed is less than 0.3.

The low-emissivity coating includes the transparent conductive oxide layer, the visible light blocking layer, a first high-refractive-index layer, a second high-refractive-index layer, and an outermost low-refractive-index layer that are sequentially stacked outward from a surface of the first glass sheet, and a physical thickness of the visible light blocking layer is in a range from 11 nm to 16 nm.

The low-emissivity coating includes the transparent conductive oxide layer, a first visible light blocking layer, an intermediate barrier layer, a second visible light blocking layer, a first high-refractive-index layer, a second high-refractive-index layer, and an outermost low-refractive-index layer that are sequentially stacked outward from a surface of the first glass sheet, and a total physical thickness of the first visible light blocking layer and the second visible light blocking layer is in a range from 11 nm to 42 nm.

A refractive index of the intermediate barrier layer is greater than or equal to 1.8.

A physical thickness of the intermediate barrier layer is in a range from 10 nm to 70 nm.

A physical thickness of the intermediate barrier layer is greater than both a physical thickness of the first visible light blocking layer and a physical thickness of the second visible light blocking layer.

A material of the intermediate barrier layer is an oxide of at least one element selected from the group consisting of Zn, Sn, Ti, Si, Al, Nb, Zr, Ni, Mg, Cr, In, Ce, W, Mo, Sb, Bi, and Ta, or a nitride or oxynitride of at least one element selected from the group consisting of Si, Al, Zr, B, Y, Ce, La, and Ti.

A ratio of the physical thickness of the first visible light blocking layer to the physical thickness of the second visible light blocking layer is (0.85 to 4):1.

A ratio of the physical thickness of the first visible light blocking layer to the physical thickness of the second visible light blocking layer is (1 to 3):1.

A ratio of the physical thickness of the first visible light blocking layer to the physical thickness of the second visible light blocking layer is (1 to 2):1.

A refractive index of the first high-refractive-index layer is in a range from 1.8 to 2.3, a refractive index of the second high-refractive-index layer is in a range from 2.0 to 2.7, and the refractive index of the second high-refractive-index layer is greater than the refractive index of the first high-refractive-index layer.

A material of the first high-refractive-index layer is a nitride or oxynitride of at least one element selected from the group consisting of Si, Al, Zr, B, Y, Ce, La, and Ti, and a material of the second high-refractive-index layer is an oxide of at least one element selected from the group consisting of Zn, Sn, Ti, Al, Nb, Zr, Ni, Mg, Cr, In, Ce, W, Mo, Sb, Bi, and Ta.

A refractive index of the outermost low-refractive-index layer is less than 1.8. A material of the outermost low-refractive-index layer is an oxide of at least one element selected from the group consisting of Si, Al, and B, or a fluoride of at least one element selected from the group consisting of Mg, Al, and Ba.

A physical thickness of the first high-refractive-index layer is in a range from 5 nm to 40 nm. A physical thickness of the second high-refractive-index layer is in a range from 5 nm to 50 nm. A physical thickness of the outermost low-refractive-index layer is in a range from 40 nm to 150 nm.

The low-emissivity coating further includes an innermost barrier layer located between the surface of the first glass sheet and the transparent conductive oxide layer, a physical thickness of the innermost barrier layer is greater than or equal to 5 nm, and a material of the innermost barrier layer is an oxide of at least one element selected from the group consisting of Zn, Sn, Ti, Si, Al, Nb, Zr, Ni, Mg, Cr, In, Ce, W, Mo, Sb, Bi, and Ta, or a nitride or oxynitride of at least one element selected from the group consisting of Si, Al, Zr, B, Y, Ce, La, and Ti.

In a second aspect, the present application provides a laminated glass including a second glass sheet, an adhesive layer, and the coated glass as described above, wherein the second glass sheet is disposed on a surface of the first glass sheet away from the low-emissivity coating via the adhesive layer.

A visible light transmittance of the laminated glass is equal to or less than 10%.

The visible light transmittance of the laminated glass is equal to or less than 5%.

A visible light reflectance of the laminated glass measured from a side where the low-emissivity coating thereof is disposed is equal to or less than 6%.

The visible light reflectance of the laminated glass measured from a side where the low-emissivity coating thereof is disposed is equal to or less than 4%.

In Lab values for a color reflected by the laminated glass measured from a side where the low-emissivity coating of the laminated glass is disposed, an "a" value is in a range from -6 to 0.5, and a "b" value is in a range from -15 to 0.

The first glass sheet is a transparent glass or a colored glass, a thickness of the first glass sheet is in a range from 0.7 mm to 2.1 mm, and a visible light transmittance of the first glass sheet is in a range from 25% to 95%.

The second glass sheet is a colored glass, and a visible light transmittance of the second glass sheet is in a range from 10% to 85%.

The second glass sheet is a transparent glass or an ultra-transparent glass, a total iron content of the transparent glass is less than or equal to 0.1%, a total iron content of the ultra-transparent glass is less than or equal to 0.015%, and a visible light transmittance of the second glass sheet is in a range from 80% to 95%.

The laminated glass further includes an infrared reflective film, the infrared reflective film includes at least one metal layer, and the infrared reflective film is disposed on a surface of the second glass sheet facing the adhesive layer or disposed on the adhesive layer.

The adhesive layer is a transparent thermoplastic polymer film, and a visible light transmittance of the transparent thermoplastic polymer film is greater than or equal to 80%.

Details of one or more embodiments of the present application are set forth in the accompanying drawings and description below. Other features, objectives, and advantages of the present application will become apparent from the description, drawings, and claims.

### BRIEF DESCRIPTION OF THE DRAWINGS

To illustrate the technical solutions of the present application or the prior art more clearly, the drawings used in the embodiments or in the prior art will be described briefly. Apparently, the following described drawings are merely for the embodiments of the present application, and other drawings can be derived based on the following drawings by those of ordinary skill in the art without any creative effort.
FIG. 1 is a schematic structural view of a coated glass provided by the present application.
FIG. 2 is a schematic cross-sectional view of a low-emissivity coating provided by some embodiments of the present application.
FIG. 3 is a schematic cross-sectional view of the low-emissivity coating provided by other embodiments of the present application.
FIG. 4 is a schematic structural view of a laminated glass provided by some embodiments of the present application.
FIG. 5 is a schematic structural view of the laminated glass provided by other embodiments of the present application.

Explanation of reference numerals in the drawings:

10: laminated glass; 100: coated glass; 110: first glass sheet; 120: low-emissivity coating; 121: innermost barrier layer; 122: transparent conductive oxide layer; 123: first high-refractive-index layer; 124: second high-refractive-index layer; 125: outermost low-refractive-index layer; 126: visible light blocking layer; 127: first visible light blocking layer; 128: intermediate barrier layer; 129: second visible light blocking layer; 210: second glass sheet; 220: adhesive layer; 230: infrared reflective film.

### DETAILED DESCRIPTION

The technical solutions of the embodiments of the present application will be described more clearly and comprehensively below in conjunction with the accompanying drawings for the embodiments of the present application. Apparently, the embodiments described herein are only part of, not all of the embodiments of the present application. Based on the embodiments of the present application, other embodiments obtained by those of ordinary skill in the art without creative efforts shall fall within the protection scope of the present application.

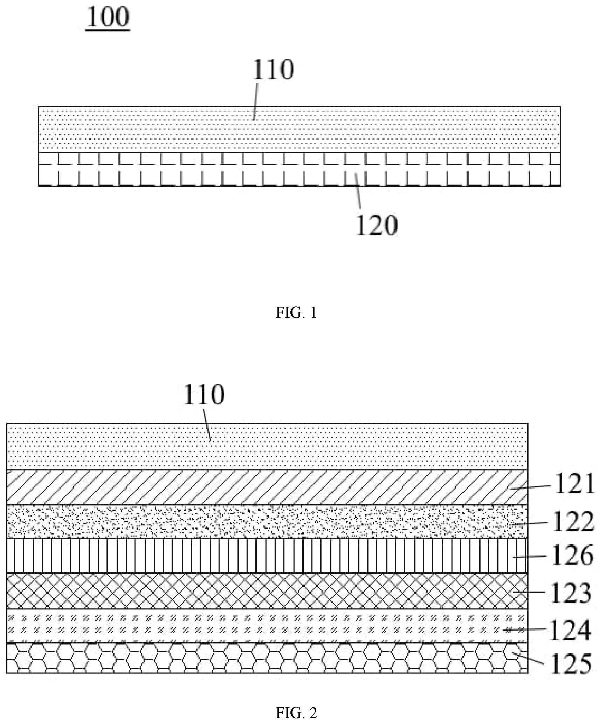

As shown in FIG. 1, a first aspect of the present application provides a coated glass 100. The coated glass 100 includes a first glass sheet 110 and a low-emissivity coating 120 disposed on at least one surface of the first glass sheet 110. The low-emissivity coating 120 can be deposited on at least one surface of the first glass sheet 110 through processes such as magnetron sputtering, and can be configured to reduce the emissivity of the first glass sheet 110. The first glass sheet 110 without the low-emissivity coating 120 has an emissivity of about 0.9. The coated glass 100 provided in the present application has an emissivity of less than 0.3 on a side where the low-emissivity coating 120 is disposed. In some embodiments, the emissivity of the coated glass 100 provided in the present application on the side where the low-emissivity coating 120 is disposed is less than or equal to 0.25. Optionally, the emissivity of the coated glass 100 provided in the present application on the side where the low-emissivity coating 120 is disposed is less than or equal to 0.20, providing excellent low-emissivity effects for heat insulation in summer and thermal retention in winter.

In some embodiments, the low-emissivity coating 120 has a sheet resistance R of equal to or less than 40 Ω/□. In some embodiments, the low-emissivity coating 120 has a sheet resistance R of equal to or less than30 Ω/□. Optionally, the low-emissivity coating 120 has a sheet resistance R of equal to or less than20 Ω/□.

In some embodiments, the low-emissivity coating 120 includes at least one transparent conductive oxide (TCO) layer and at least one visible light blocking layer. The total physical thickness of the at least one visible light blocking layer is greater than 10 nm. The transparent conductive oxide (TCO) layer serves as a low-emissivity functional layer of the low-emissivity coating 120, and is primarily configured to reflect mid- and far-infrared rays to provide the low-emissivity effect. The visible light blocking layer is mainly configured to absorb visible light, significantly reducing the visible light transmittance of the coated glass 100. Specifically, the at least one visible light blocking layer is disposed on a side of the at least one transparent conductive oxide layer away from the first glass sheet 110.

Specifically, the visible light transmittance of the first glass sheet 110 is TL1, and the visible light transmittance of the coated glass 100 is TL2. TL1 and TL2 satisfy that TL2/TL1 is equal to or less than 0.4. In some embodiments, TL2/TL1 is equal to or less than 0.35, or TL2/TL1 is equal to or less than 0.30, or TL2/TL1 is equal to or less than 0.25, or TL2/TL1 is equal to or less than 0.20, or TL2/TL1 is equal to or less than 0.15, or even TL2/TL1 is equal to or less than 0.10. By adding at least one visible light blocking layer in the low-emissivity coating 120 in the present application, the coated glass 100 obtained can have a significantly reduced visible light transmittance when compared with the first glass sheet 110 without the low-emissivity coating 120. Consequently, low-cost transparent glass or colored glass with high visible light transmittance can be used as the first glass sheet 110, significantly reducing the manufacturing cost and difficulty of the coated glass 100. Furthermore, when the coated glass 100 is further manufactured into a laminated glass with low visible light transmittance, the need for high-cost colored glass, colored adhesive layers, and light-adjusting elements can be minimized, thereby greatly lowering the manufacturing cost and difficulty of the laminated glass, and expanding combination options for the laminated glass.

In some embodiments, on the side where the low-emissivity coating is disposed, the coated glass 100 has a visible light reflectance RL1<6%. Incorporating at least one visible light blocking layer in the low-emissivity coating 120 is conducive to reducing the visible light reflectance RL1. In some embodiments, RL1 is equal to or less than 5%. Optionally, RL1 is equal to or less than 4%. Optionally, RL1 is equal to or less than 3%. The above configurations enable the coated glass 100 to have a significantly reduced visible light transmittance and maintain a low visible light reflectance, avoiding interference from specular reflections.

As shown in FIG. 2, the low-emissivity coating 120 is provided with one visible light blocking layer. Specifically, the low-emissivity coating 120 includes an innermost barrier layer 121, a transparent conductive oxide layer 122, a visible light blocking layer 126, a first high-refractive-index layer 123, a second high-refractive-index layer 124, and an outermost low-refractive-index layer 125 that are sequentially stacked outward from the surface of the first glass sheet 110. The visible light blocking layer 126 is in direct contact with the transparent conductive oxide layer 122. The physical thickness of the visible light blocking layer 126 is in a range from 11 nm to 16 nm, and specifically can be, for example, 11 nm, 12 nm, 13 nm, 14 nm, 15 nm, 16 nm, etc.

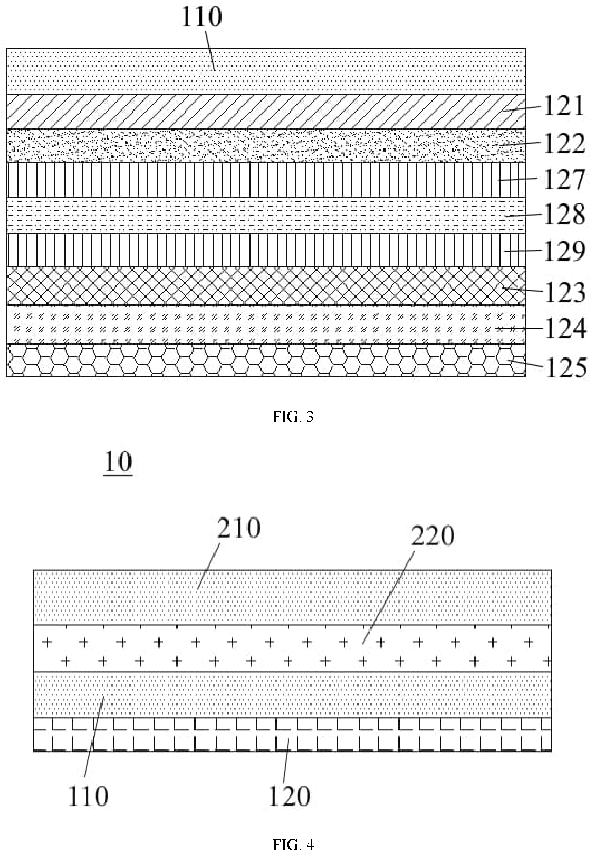

As shown in FIG. 3, the low-emissivity coating 120 is provided with two visible light blocking layers. Specifically, the low-emissivity coating 120 includes an innermost barrier layer 121, a transparent conductive oxide layer 122, a first visible light blocking layer 127, an intermediate barrier layer 128, a second visible light blocking layer 129, a first high-refractive-index layer 123, a second high-refractive-index layer 124, and an outermost low-refractive-index layer 125 that are sequentially stacked outward from the surface of the first glass sheet 110. The first visible light blocking layer 127 is in direct contact with the transparent conductive oxide layer 122. The total physical thickness of the first visible light blocking layer 127 and the second visible light blocking layer 129 is in a range from 11 nm to 42 nm, and specifically can be, for example, 11 nm, 15 nm, 18 nm, 20 nm, 25 nm, 30 nm, 35 nm, 40 nm, 42 nm, etc.

In the present application, the material and thickness of each layer in the low-emissivity coating 120 are engineered to enable the low-emissivity coating 120 to withstand subsequent high-temperature heat treatment of at least 560°C, as well as other bending forming processes, such as the sag bending process or press bending process in automotive glass production. Furthermore, the optical performance, mechanical performance and the like of the coated glass 100 can meet the usage standards for automotive glass.

In FIG. 2 and FIG. 3, the innermost barrier layer 121 is located between the surface of the first glass sheet 110 and the transparent conductive oxide layer 122. The innermost barrier layer 121 is directly deposited on the surface of the first glass sheet 110. The innermost barrier layer 121 can block alkali metal ions from the first glass sheet 110 from damaging the transparent conductive oxide layer 122 during the high-temperature heat treatment process, which is conducive to improving the heat treatment stability of the low-emissivity coating 120. The physical thickness of the innermost barrier layer 121 is greater than or equal to 5 nm. The material of the innermost barrier layer 121 is an oxide of at least one element selected from the group consisting of Zn, Sn, Ti, Si, Al, Nb, Zr, Ni, Mg, Cr, In, Ce, W, Mo, Sb, Bi, and Ta, or a nitride or oxynitride of at least one element selected from the group consisting of Si, Al, Zr, B, Y, Ce, La, and Ti. The material of the innermost barrier layer 121 can be, for example, Si₃N₄, ZrN_{X}, ZrO_{X}, etc.

The material of the transparent conductive oxide layer 122 is at least one selected from the group consisting of doped zinc oxide, indium tin oxide (ITO), chromium-doped nickel oxide, fluorine-doped tin oxide (FTO), and zinc tin oxide (ZnSnOₓ). The doped zinc oxide is a zinc oxide doped with at least one element selected from the group consisting of aluminum, tungsten, hafnium, gallium, yttrium, niobium, and neodymium. The physical thickness of the transparent conductive oxide layer 122 is in a range from 80 nm to 500 nm, and specifically can be, for example, 80 nm, 90 nm, 100 nm, 150 nm, 200 nm, 250 nm, 300 nm, 350 nm, 400 nm, 450 nm, or 500 nm. In some embodiments, the physical thickness of the transparent conductive oxide layer 122 is in a range from 100 nm to 300 nm.

The low-emissivity coating 120 can be provided with one visible light blocking layer or two visible light blocking layers. The material of the visible light blocking layer is any one or more selected from Ni, Cr, Ti, Nb, Mo, Si, Zr, and W, and specifically can be, for example, nickel-chromium alloy (NiCr), nickel-silicon alloy (NiSi), metallic chromium (Cr), molybdenum-titanium alloy (MoTi), etc. When two visible light blocking layers are provided, the materials of the two visible light blocking layers can be the same material, for example, both are nickel-chromium alloy (NiCr). It should be understood that the materials of the two visible light blocking layers can also be different materials, for example, one is nickel-chromium alloy (NiCr), and the other is metallic chromium (Cr).

In some embodiments, the low-emissivity coating 120 is provided with two visible light blocking layers, such as the first visible light blocking layer 127 and the second visible light blocking layer 129 as shown in FIG. 3. The physical thickness of the first visible light blocking layer 127 can be in a range from 5 nm to 25 nm, and the physical thickness of the second visible light blocking layer 129 can be in a range from 3 nm to 20 nm. Considering factors such as visible light transmittance, visible light reflectance, manufacturing cost, and manufacturing difficulty, in some embodiments, the total physical thickness of the first visible light blocking layer 127 and the second visible light blocking layer 129 is in a range from 15 nm to 35 nm.

In other embodiments, the low-emissivity coating 120 is provided with two visible light blocking layers. The ratio of the physical thickness of the first visible light blocking layer 127 to the physical thickness of the second visible light blocking layer 129 is (0.85 to 4):1. Specifically, the ratio can be, for example, 0.85:1, 0.9:1, 0.95:1, 1:1, 1.05:1, 1.2:1, 1.5:1, 2:1, 2.5:1, 3:1, 3.5:1, 4:1, etc. In some embodiments, the physical thickness of the first visible light blocking layer 127 is greater than the physical thickness of the second visible light blocking layer 129. For example, the ratio of the physical thickness of the first visible light blocking layer 127 to the physical thickness of the second visible light blocking layer 129 is (1 to 3):1. Optionally, the ratio of the physical thickness of the first visible light blocking layer 127 to the physical thickness of the second visible light blocking layer 129 is (1 to 2):1. Optionally, the ratio of the physical thickness of the first visible light blocking layer 127 to the physical thickness of the second visible light blocking layer 129 is (1 to 1.5):1. The above configurations are beneficial for further reducing the visible light reflectance of the coated glass 100 on the side where the low-emissivity coating 120 is located.

In FIG. 3, the low-emissivity coating 120 further includes an intermediate barrier layer 128 located between the first visible light blocking layer 127 and the second visible light blocking layer 129. The intermediate barrier layer 128, through optical design, can reduce visible light reflectance and improve reflection color, and can protect the first visible light blocking layer 127 and the second visible light blocking layer 129 during magnetron sputtering and high-temperature heat treatment. The physical thickness of the intermediate barrier layer 128 ranges from 10 nm to 70 nm. The material of the intermediate barrier layer 128 is an oxide of at least one element selected from Zn, Sn, Ti, Si, Al, Nb, Zr, Ni, Mg, Cr, In, Ce, W, Mo, Sb, Bi, and Ta, or a nitride or oxynitride of at least one element selected from Si, Al, Zr, B, Y, Ce, La, and Ti. In some embodiments, the refractive index of the intermediate barrier layer 128 is greater than or equal to 1.8. Specifically, the intermediate barrier layer 128 can be, for example, Si₃N₄, TiO₂, SnO₂, Nb₂O₅, etc.

In some embodiments, the physical thickness of the intermediate barrier layer 128 is greater than the physical thickness of the first visible light blocking layer 127, and the physical thickness of the intermediate barrier layer 128 is greater than the physical thickness of the second visible light blocking layer 129. In some embodiments, the physical thickness of the intermediate barrier layer 128 is greater than the sum of the physical thickness of the first visible light blocking layer 127 and the physical thickness of the second visible light blocking layer 129. Specifically, the physical thickness of the intermediate barrier layer 128 ranges from 20 nm to 50 nm. For example, the physical thickness of the intermediate barrier layer 128 can be 20 nm, 25 nm, 30 nm, 40 nm, 45 nm, 50 nm, etc.

In the present application, the transparent conductive oxide layer 122 serves as the low-emissivity functional layer of the low-emissivity coating 120, endowing the low-emissivity coating 120 with excellent low-emissivity effects for heat insulation in summer and thermal retention in winter. The low-emissivity effect can be increased as the emissivity of the low-emissivity coating 120 decreases. Increasing the physical thickness of the transparent conductive oxide layer 122 as much as possible facilitates further emissivity reduction, but this in turn increases the visible light reflectance and shifts the reflection color away from a neutral tone, thereby hindering the coated glass 100 from meeting the usage requirements for automotive glass. Therefore, the low-emissivity coating 120 provided in the present application can further include a first high-refractive-index layer 123, a second high-refractive-index layer 124, and an outermost low-refractive-index layer 125 that are sequentially stacked outward from the surface of the first glass sheet 110, which are configured to reduce visible light reflectance, improve the reflection color, and protect the transparent conductive oxide layer 122, the visible light blocking layer 126, and the second visible light blocking layer 129 during high-temperature heat treatment. The outermost low-refractive-index layer 125 is a film farthest from the surface of the first glass sheet 110 in the low-emissivity coating 120. As shown in FIG. 2, the first high-refractive-index layer 123 is in direct contact with the visible light blocking layer 126. As shown in FIG. 3, the first high-refractive-index layer 123 is in direct contact with the second visible light blocking layer 129.

In some embodiments, the refractive index of the first high-refractive-index layer 123 ranges from 1.8 to 2.3. In an example, the material of the first high-refractive-index layer 123 is a nitride or oxynitride of at least one element selected from Si, Al, Zr, B, Y, Ce, La, and Ti, and specifically, for example Si₃N₄, AlN, BN, etc.

In other embodiments, the refractive index of the second high-refractive-index layer 124 ranges from 2.0 to 2.7. In an example, the material of the second high-refractive-index layer 124 is an oxide of at least one element selected from Zn, Sn, Ti, Al, Nb, Zr, Ni, Mg, Cr, In, Ce, W, Mo, Sb, Bi, and Ta, and specifically can be, for example, TiO₂, ZrO₂, Nb₂O₅, etc. In an example, the refractive index of the second high-refractive-index layer 124 is greater than the refractive index of the first high-refractive-index layer 123, thereby being more conducive to reducing visible light reflectance and improving the reflection color. In an example, the refractive index of the second high-refractive-index layer 124 is at least 0.3 greater than the refractive index of the first high-refractive-index layer 123. Optionally, the refractive index of the second high-refractive-index layer 124 is at least 0.5 greater than the refractive index of the first high-refractive-index layer 123. For example, the refractive index of the second high-refractive-index layer 124 is 2.5, and the refractive index of the first high-refractive-index layer 123 is 2.0.

The refractive index of the outermost low-refractive-index layer 125 is less than 1.8. In some embodiments, the refractive index of the outermost low-refractive-index layer 125 is less than or equal to 1.7. Optionally, the refractive index of the outermost low-refractive-index layer 125 is less than or equal to 1.6. The material of the outermost low-refractive-index layer 125 is an oxide of at least one element selected from Si, Al, and B, or a fluoride of at least one element selected from Mg, Al, and Ba. Specifically, the material of the outermost low-refractive-index layer 125 can be, for example, SiO₂, Al₂O₃, MgF₂, etc.

The physical thickness of the first high-refractive-index layer 123 is in a range from 5 nm to 40 nm, the physical thickness of the second high-refractive-index layer 124 is in a range from 5 nm to 50 nm, and the physical thickness of the outermost low-refractive-index layer 125 is in a range from 40 nm to 150 nm.

In FIG. 2, the low-emissivity coating 120 includes one visible light blocking layer 126. The physical thickness of the first high-refractive-index layer 123 is in a range from 10 nm to 40 nm, for example, 10 nm, 15 nm, 20 nm, 25 nm, 30 nm, 35 nm, 40 nm, etc. In some embodiments, the physical thickness of the first high-refractive-index layer 123 is in a range from 15 nm to 30 nm. The physical thickness of the second high-refractive-index layer 124 is in a range from 20 nm to 50 nm, for example, 20 nm, 25 nm, 30 nm, 35 nm, 40 nm, 45 nm, 50 nm, etc. In some embodiments, the physical thickness of the second high-refractive-index layer 124 is in a range from 20 nm to 40 nm.

In FIG. 3, the low-emissivity coating 120 includes two visible light blocking layers, i.e., the first visible light blocking layer 127 and the second visible light blocking layer 129. The physical thickness of the first high-refractive-index layer 123 ranges from 5 nm to 10 nm, for example, 5 nm, 6 nm, 7 nm, 8 nm, 9 nm, 10 nm, etc. The physical thickness of the second high-refractive-index layer 124 ranges from 5 nm to 20 nm, for example, 5 nm, 8 nm, 10 nm, 15 nm, 20 nm, etc. In some embodiments, the physical thickness of the second high-refractive-index layer 124 ranges from 5 nm to 10 nm.

In FIG. 2 and FIG. 3, the physical thickness of the outermost low-refractive-index layer 125 is in a range of 40 nm to 150 nm, for example, 40 nm, 45 nm, 50 nm, 55 nm, 60 nm, 70 nm, 80 nm, 90 nm, 100 nm, 110 nm, 120 nm, 130 nm, 140 nm, 150 nm, etc. In some embodiments, the physical thickness of the outermost low-refractive-index layer 125 is in a range of 50 nm to 100 nm.

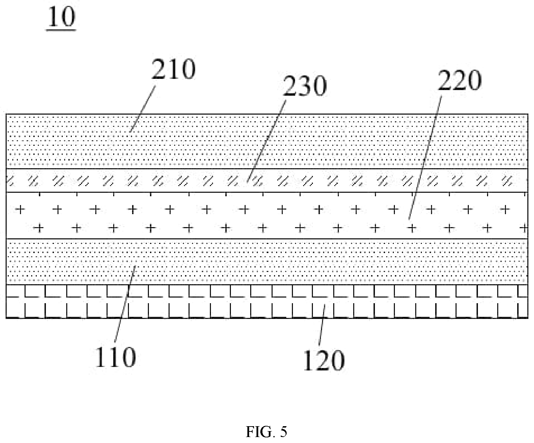

As shown in FIG. 4 and FIG. 5, a second aspect of the present application provides a laminated glass 10, including the aforementioned coated glass 100, a second glass sheet 210, and an adhesive layer 220. The second glass sheet 210 is disposed on the surface of the first glass sheet 110 away from the low-emissivity coating 120 via the adhesive layer 220.

In some embodiments, the laminated glass 10 can be mounted on a vehicle as an automotive window glass, specifically such as a sunroof glass or a side window glass. In FIG. 4, after the laminated glass 10 is mounted on the vehicle, the structure of the laminated glass 10, from the vehicle exterior to the vehicle interior, includes a second glass sheet 210, an adhesive layer 220, a first glass sheet 110, and a low-emissivity coating 120 that are stacked in sequence. In FIG. 5, after the laminated glass 10 is mounted on the vehicle, the structure thereof, from the vehicle exterior to the vehicle interior, includes a second glass sheet 210, an infrared reflective film 230, an adhesive layer 220, a first glass sheet 110, and a low-emissivity coating 120 that are stacked in sequence from the vehicle exterior to the vehicle interior. The second glass sheet 210 serves as the outer glass sheet of the laminated glass 10, the first glass sheet 110 serves as the inner glass sheet of the laminated glass 10, and the low-emissivity coating 120 faces the vehicle interior. The infrared reflective film 230 is disposed on the surface of the second glass sheet 210 facing the adhesive layer 220, or on the adhesive layer 220.

In some embodiments, the visible light transmittance of the laminated glass 10 is equal to or less than10%, to better serve as a sunroof glass or side window glass without a sunshade. The visible light transmittance of the laminated glass 10 can be, but is not limited to, 10%, 9%, 8%, 7%, 6%, 5%, 4%, 3%, 2%, 1%, 0.5%, or a range formed by any two of these values. In some embodiments, the visible light transmittance of the laminated glass 10 is equal to or less than 5%.

In some embodiments, the visible light reflectance of the laminated glass 10 measured from the side of the laminated glass 10 where the low-emissivity coating 120 is located is equal to or less than 6%. In some embodiments, the visible light reflectance of the laminated glass 10 is equal to or less than 5%. In some embodiments, the visible light reflectance of the laminated glass 10 is equal to or less than 4%. In some embodiments, the visible light reflectance of the laminated glass 10 is equal to or less than 3%. In some embodiments, the visible light reflectance of the laminated glass 10 is equal to or less than 2%.

In some embodiments, in the Lab values of the color reflected by the laminated glass 10, measured from the side of the laminated glass 10 where the low-emissivity coating 120 is located, an "a" value ranges from -6 to 0.5, and a "b" value ranges from -15 to 0. For example, the "a" value can be, but is not limited to, -6, -5, -4, -3, -2, -1, 0, 0.5, or a range formed by any two of these values. The "b" value can be, but is not limited to, -15, -14, -13, -12, -11, -10, -9, -8, -7, -6, -5, -4, -3, -2, -1, 0, or a range formed by any two of these values. Within the above ranges, the laminated glass 10 has a visually comfortable or even neutral color. In some embodiments, in the Lab values of the color reflected by the laminated glass 10, measured from the side of the laminated glass 10 where the low-emissivity coating 120 is located, an "a" value ranges from -3 to 0, and a "b-" value ranges from -10 to 0.

The first glass sheet 110 can be a transparent glass or a colored glass. The thickness of the first glass sheet 110 can be in a range from 0.7 mm to 2.1 mm, and the visible light transmittance of the first glass sheet 110 can be in a range from 25% to 95%. The total iron content of the transparent glass is less than or equal to 0.1%, and the visible light transmittance of the transparent glass is in a range from 80% to 95%. The total iron content of the colored glass is greater than or equal to 0.5%, and the visible light transmittance of the colored glass is in a range from 25% to 85%. The low-emissivity coating 120 provided in the present application can significantly reduce the visible light transmittance of the coated glass 100, and therefore considering manufacturing cost and difficulty, the first glass sheet 110 can be a transparent glass or a colored glass with a visible light transmittance greater than or equal to 70%. For example, the first glass sheet 110 can be, but is not limited to, a transparent glass with a thickness of 2.1 mm and a visible light transmittance of 89%, or a green glass with a thickness of 1.6 mm and a visible light transmittance of 83%, or a green glass with a thickness of 2.1 mm and a visible light transmittance of 80%.

In FIG. 4, the laminated glass 10 is not provided with an infrared reflective film. The second glass sheet 210 can be a transparent glass or a colored glass. In an example, the second glass sheet 210 is a colored glass, its thickness is in a range from 1.6 mm to 4 mm, and its visible light transmittance is in a range from 10% to 85%. For instance, the second glass sheet 210 can be, but is not limited to, a green glass, or a gray glass, etc. The thickness of the second glass sheet 210 can be, but is not limited to, 1.6 mm, or 2.0 mm, or 2.4 mm, or 2.8 mm, or 3.2 mm, or 3.6 mm, or 4.0 mm, or other values between 1.6 mm and 4 mm. The visible light transmittance of the second glass sheet 210 can be, but is not limited to, 10%, or 20%, or 30%, or 40%, or 50%, or 60%, or 70%, or 80%, or 85%, or other values between 10% and 85%. Specifically, the second glass sheet 210 can be, but is not limited to, a green glass with a thickness of 1.6 mm and a visible light transmittance of 83%, or a green glass with a thickness of 2.1 mm and a visible light transmittance of 80%, or a gray glass with a thickness of 1.6 mm and a visible light transmittance of 45%, or a gray glass with a thickness of 2.1 mm and a visible light transmittance of 28%.

In FIG. 5, the laminated glass 10 is provided with an infrared reflective film 230. The second glass sheet 210 can be a transparent glass or an ultra-transparent glass, the thickness of the second glass sheet 210 is in a range from 1.6 mm to 4 mm, and the visible light transmittance of the second glass sheet 210 is in a range from 80% to 95%. The total iron content of the transparent glass is less than or equal to 0.1%, and the visible light transmittance of the transparent glass is greater than or equal to 80%. The total iron content of the ultra-transparent glass is less than or equal to 0.015%, and the visible light transmittance of the ultra-transparent glass is greater than or equal to 91%. Using transparent glass or ultra-transparent glass with low total iron content can reduce infrared absorption by the second glass sheet 210, and further improve the infrared reflection effect of the laminated glass 10, which is beneficial for further reducing the total solar energy transmittance of the laminated glass 10, resulting in superior heat insulation performance. For example, the thickness of the second glass sheet 210 can be, but is not limited to, 1.6 mm, or 2.0 mm, or 2.4 mm, or 2.8 mm, or 3.2 mm, or 3.6 mm, or 4 mm, or other values between 1.6 mm and 4 mm. The visible light transmittance of the second glass sheet 210 can be, but is not limited to, 88%, or 89%, or 90%, or 91%, or 92%, or 93%, or other values between 80% and 95%. Specifically, the second glass sheet 210 can be, but is not limited to, an ultra-transparent glass with a thickness of 2.1 mm and a visible light transmittance of 91%.

The low-emissivity coating 120 provided in the present application can significantly reduce the visible light transmittance of the coated glass 100. Therefore, considering manufacturing cost and difficulty, at least one of the first glass sheet 110 and the second glass sheet 210 can be a transparent glass.

In some embodiments, the adhesive layer 220 is a transparent thermoplastic polymer film or a colored thermoplastic polymer film, and the thickness of the adhesive layer 220 is in a range from 0.38 mm to 2.28 mm. For example, the thickness of the adhesive layer 220 can be, but is not limited to, 0.38 mm, or 0.76 mm, or 1.14 mm, or 1.52 mm, or 1.9 mm, or 2.28 mm, or other values between 0.38 mm and 2.28 mm.

The material of the thermoplastic polymer film can be at least one selected from polyvinyl butyral (PVB), polyurethane (PU), ethylene-vinyl acetate copolymer (EVA), and ionic polymer (SGP). When the adhesive layer 220 is a transparent thermoplastic polymer, the visible light transmittance of the transparent thermoplastic polymer is greater than or equal to 80%. For example, the visible light transmittance of the adhesive layer 220 can be, but is not limited to, 80%, or 85%, or 90%, or 95%. When the adhesive layer 220 is a colored thermoplastic polymer film, the visible light transmittance of the colored thermoplastic polymer film is in a range from 1% to 45%. For example, the visible light transmittance of the adhesive layer 220 can be, but is not limited to, 1%, or 7%, or 12%, or 18%, or 24%, or 29%, or 35%, or 40%, or 42%, or 45%, or other values between 1% and 45%. The colored thermoplastic polymer film can be a gray thermoplastic polymer film, a green thermoplastic polymer film, or a blue thermoplastic polymer film.

The low-emissivity coating 120 provided in the present application can significantly reduce the visible light transmittance of the coated glass 100. Therefore, considering manufacturing cost and difficulty, the adhesive layer 220 can be a transparent thermoplastic polymer, for example, transparent PVB with a thickness of 0.76 mm and a visible light transmittance of 88%.

In some embodiments, the infrared reflective film 230 includes at least one metal layer. The material of the metal layer can be selected from metals such as silver (Ag), gold (Au), copper (Cu), aluminum (Al), platinum (Pt), etc., or metal alloys thereof. In some embodiments, the metal layer is made of silver metal or a silver alloy. When the metal layer is a silver alloy, it can be an alloy of silver with at least one of gold, aluminum, copper, or platinum. It should be noted that, depending on the specific design of the infrared reflective film 230, the number of the metal layer can be, but is not limited to, one, or two, or three, or four, or five, or more than five. For example, when the metal layer is made of silver metal or a silver alloy, the infrared reflective film 230 can include, but is not limited to, two silver infrared reflective films, three silver infrared reflective films, four silver infrared reflective films, five silver infrared reflective films, etc. It should be understood that the infrared reflective film 230 also includes at least two dielectric layers, with each metal layer disposed between two adjacent dielectric layers. The metal layers and dielectric layers are deposited by magnetron sputtering process. Through modification and design of the thickness and material of the metal layers and dielectric layers, the infrared reflective film 230 can withstand subsequent high-temperature heat treatment or other bending forming processes, and the optical performance, mechanical performance, etc., of the resulting laminated glass 10 can meet the usage standards for vehicle glass. The number of dielectric layers can be two, five, eight, ten, or even more. The material of the dielectric layers can be an oxide of an element selected from Zn, Mg, Sn, Ti, Nb, Zr, Ni, In, Al, Ce, W, Mo, Sb, or Bi, or a nitride or oxynitride of an element selected from Si, Al, Zr, Y, Ce, or La, or any combination of these materials. For example, the dielectric layer can be, but is not limited to, zinc stannate, magnesium-doped zinc stannate, zinc oxide, magnesium-doped zinc oxide, zirconium-doped zinc oxide, niobium oxide, bismuth oxide, aluminum-doped zinc oxide, zirconium oxide, titanium oxide, titanium peroxide, etc.

In some embodiments, to enable the visible light transmittance of the laminated glass 10 to be adjusted in real time, a light-adjusting element is further provided between the first glass sheet 110 and the second glass sheet 210 to meet the requirements of different scenarios. The light-adjusting element can be, but is not limited to, a polymer dispersed liquid crystal (PDLC) light-adjusting film, a suspended particle device (SPD) light-adjusting film, an electrochromic (EC) light-adjusting film, a dye-doped liquid crystal (LC) light-adjusting film, etc.

The coated glass and laminated glass provided in the present application exhibit excellent low-emissivity effects for heat insulation in summer and thermal retention in winter. Moreover, the coated glass and laminated glass have a significantly reduced visible light transmittance and maintain a low visible light reflectance, avoiding interference from specular reflections. As such, manufacturing costs and difficulties can be significantly reduced, while expanding combination options for the laminated glass.

In a third aspect, the present application further provides a vehicle, including:
a vehicle body; and
the laminated glass 10 according to the second aspect, wherein the laminated glass 10 is mounted on the vehicle body.

To more clearly illustrate the objectives and advantages of the present application, the coated glass and laminated glass of the present application and their effects will be further described in conjunction with specific embodiments. It should be understood that the specific embodiments described herein are provided only for illustrative purposes and are not intended to limit the present application. Unless otherwise specified, the following examples do not include other components except for unavoidable impurities. Unless otherwise specified, the reagents and instruments used in the examples are conventional choices in the field. Experimental methods for which specific conditions are not specified in the following examples are carried out under conventional conditions, such as those described in literature and books, or according to methods recommended by the manufacturer.

### Comparative Examples 1 to 5 and Examples 1 to 12

A transparent glass with a thickness of 2.1 mm was used as the first glass sheet 110. The low-emissivity coatings 120 of Comparative Examples 1 to 5 and Examples 1 to 12 were each deposited onto the surfaces of the transparent glasses using a magnetron sputtering process to obtain the coated glass 100 of Comparative Examples 1 to 5 and Examples 1 to 12, respectively. In the following examples and comparative examples, 2.1 transparent glass refers to a transparent glass with a thickness of 2.1 mm, 2.1 green glass refers to a green glass with a thickness of 2.1 mm, and 2.1 gray glass refers to a gray glass with a thickness of 2.1 mm.

Among them, the low-emissivity coatings of Comparative Examples 1 to 2 contain no visible light blocking layer. The low-emissivity coatings 120 of Comparative Examples 3 to 4 and Examples 1 to 2 each include only one visible light blocking layer, with specific layer structures shown in Table 1.

**Table 1: Coated glass of Comparative Examples 1 to 4 and Examples 1 to 2**

| | Comparat ive Example 1 | Comparat ive Example 2 | Comparat ive Example 3 | Comparat ive Example 4 | Exampl e 1 | Exampl e 2 | |
|---|---|---|---|---|---|---|---|
| First glass sheet | 2.1 | 2.1 | 2.1 | 2.1 | 2.1 | 2.1 | |

| | | transpare nt glass | transpare nt glass | transpare nt glass | transpare nt glass | transpar ent glass | transpar ent glass |
|---|---|---|---|---|---|---|---|
| | Innermost barrier layer | Si₃N₄ 10 nm | Si₃N₄ 7 nm | Si₃N₄ 8 nm | Si₃N₄ 18 nm | Si₃N₄ 18 nm | Si₃N₄ 35 nm |
| | Transparent conductive oxide layer | ITO 120 nm | ITO 118 nm | ITO 130 nm | ITO 110 nm | ITO 118 nm | ITO 120 nm |
| | Visible light blocking layer | / | / | NiCr 9 nm | NiCr 17 nm | NiCr 13 nm | NiCr 15 nm |
| Low-emissi vity coating | First high-refractive-index layer | / | / | / | Si₃N₄ 9 nm | Si₃N₄ 15 nm | Si₃N₄ 20 nm |
| | Second high-refractive-index layer | / | Si₃N₄ 8 nm | / | TiO₂ 9 nm | TiO₂ 25 nm | TiO₂ 30 nm |
| | Outermost low-refractive-i ndex layer | Si₃N₄ 35 nm | SiO₂ 180 nm | Si₃N₄ 35 nm | SiO₂ 85 nm | SiO₂ 52 nm | SiO₂ 80 nm |

The low-emissivity coatings 120 of Comparative Example 5 and Examples 3 to 7 each include two visible light blocking layers, with specific layer structures shown in Table 2.

**Table 2: Coated glass of Comparative Example 5 and Examples 3 to 7**

| | | Comparat ive Example 5 | Example 3 | Example 4 | Example 5 | Example 6 | Example 7 |
|---|---|---|---|---|---|---|---|
| First glass sheet | | 2.1 transparen t glass | 2.1 transpar ent glass | 2.1 transpar ent glass | 2.1 transpar ent glass | 2.1 transpar ent glass | 2.1 transpar ent glass |
| Low-emissi vity coating | Innermost barrier layer | Si₃N₄ 54 nm | Si₃N₄ 7 nm | Si₃N₄ 7 nm | Si₃N₄ 7 nm | Si₃N₄ 7 nm | Si₃N₄ 7 nm |
| | Transparent conductive oxide layer | NiCr 11 nm/ | ITO 110 nm | ITO 110 nm | ITO 110 nm | ITO 110 nm | ITO 105 nm |
| | | ITO 75 nm | | | | | |
| | First visible light blocking layer | | NiCr 7 nm | NiCr 7.5 nm | NiCr 10 nm | NiCr 12 nm | NiCr 14 nm |
| | Intermediate barrier layer | / | Si₃N₄ 41 nm | Si₃N₄ 41 nm | Si₃N₄ 45 nm | Si₃N₄ 45 nm | Si₃N₄ 41 nm |
| | Second visible light blocking layer | NiCr 16 nm | NiCr 5 nm | NiCr 5 nm | NiCr 9 nm | NiCr 11 nm | NiCr 16 nm |
| | First high-refractive-i ndex layer | / | Si₃N₄ 7 nm | Si₃N₄ 7 nm | Si₃N₄ 7 nm | Si₃N₄ 7 nm | Si₃N₄ 7 nm |
| | Second high-refractive-i ndex layer | / | TiO₂ 5 nm | TiO₂ 5 nm | TiO₂ 8 nm | TiO₂ 8 nm | TiO₂ 9 nm |
| | Outermost low-refractive-in dex layer | Si₃N₄ 57 nm | SiO₂ 85 nm | SiO₂ 85 nm | SiO₂ 90 nm | SiO₂ 85 nm | SiO₂ 80 nm |

The low-emissivity coatings 120 of Examples 8 to 12 each include two visible light blocking layers, with specific layer structures shown in Table 3.

**Table 3: Coated glass of Examples 8 to 12**

| | | Example 8 | Example 9 | Example 10 | Example 11 | Example 12 |
|---|---|---|---|---|---|---|
| First glass sheet | | 2.1 transparen t glass | 2.1 transparen t glass | 2.1 transparen t glass | 2.1 transparen t glass | 2.1 transparen t glass |
| | Innermost barrier layer | Si₃N₄ 7 nm | Si₃N₄ 7 nm | Si₃N₄ 7 nm | Si₃N₄ 10 nm | Si₃N₄ 10 nm |
| | Transparent conductive oxide layer | ITO 105 nm | ITO 110 nm | ITO 110 nm | ITO 110 nm | ITO 110 nm |
| Low-emissivit y coating | First visible light blocking layer | NiCr 17 nm | NiCr 22 nm | NiCr 11 nm | NiCr 16 nm | NiCr 18 nm |
| | Intermediate barrier layer | Si₃N₄ 41 nm | Si₃N₄ 44 nm | Si₃N₄ 45 nm | Si₃N₄ 30 nm | Si₃N₄ 30 nm |
| | Second visible light blocking layer | NiCr 18 nm | NiCr 20 nm | NiCr 12 nm | NiCr 7 nm | NiCr 5 nm |
| | First high-refractive-inde x layer | Si₃N₄ 7 nm | Si₃N₄ 7 nm | Si₃N₄ 7 nm | Si₃N₄ 8 nm | Si₃N₄ 8 nm |
| | Second high-refractive-inde x layer | TiO₂ 9 nm | TiO₂ 8 nm | TiO₂ 8 nm | TiO₂ 8 nm | TiO₂ 8 nm |
| | Outermost low-refractive-inde x layer | SiO₂ 80 nm | SiO₂ 83 nm | SiO₂ 85 nm | SiO₂ 75 nm | SiO₂ 75 nm |

The coated glass 100 of Comparative Examples 1 to 5 and Examples 1 to 12 were each subjected to a high-temperature heat treatment at a temperature of at least 560°C. The visible light transmittance TL2 of the coated glass was then measured, and the results are recorded in Table 4.

Visible light transmittance: Measured and calculated according to ISO 9050 within the wavelength range of 380 nm to 780 nm.

**Table 4: Visible light transmittance of the coated glass of Comparative Examples 1 to 5 and Examples 1 to 12**

| | A total physical thickness of visible light blocking layers | Visible light transmittance | TL2/TL1 |
|---|---|---|---|
| 2.1 transparent glass | 0 | TL1=90% | / |
| 2.1 green glass | 0 | TL1=80% | / |
| 2.1 gray glass | 0 | TL1=28% | / |
| Comparative Example 1 | 0 | TL2=79.6% | 0.88 |
| Comparative Example 2 | 0 | TL2=88.2% | 0.98 |
| Comparative Example 3 | 9 nm | TL2=37.4% | 0.42 |
| Comparative Example 4 | 17 nm | TL2=26.6% | 0.30 |
| Comparative Example 5 | 27 nm | TL2=18.6% | 0.21 |
| Example 1 | 13 nm | TL2=30.8% | 0.34 |
| Example 2 | 15 nm | TL2=27.5% | 0.31 |
| Example 3 | 12 nm | TL2=33.1% | 0.37 |
| Example 4 | 12.5 nm | TL2=31.7% | 0.35 |
| Example 5 | 19 nm | TL2=22.4% | 0.25 |
| Example 6 | 23 nm | TL2=15.9% | 0.18 |
| Example 7 | 30 nm | TL2=11.1% | 0.12 |
| Example 8 | 35 nm | TL2=7.4% | 0.08 |
| Example 9 | 42 nm | TL2=5.8% | 0.06 |
| Example 10 | 23 nm | TL2=14.49% | 0.16 |
| Example 11 | 23 nm | TL2=15.03% | 0.17 |
| Example 12 | 23 nm | TL2=13.89% | 0.15 |

It can be seen from Tables 1 to 4 as follows: The low-emissivity coatings 120 of Comparative Example 1 and Comparative Example 2 each include no visible light blocking layer. TL2 of the coated glass 100 of Comparative Example 1 is comparable to the visible light transmittance of 2.1 green glass. TL2 of the coated glass 100 of Comparative Example 2 is comparable to the visible light transmittance of 2.1 transparent glass. The low-emissivity coatings 120 of Comparative Example 1 and Comparative Example 2 cannot significantly reduce the visible light transmittance of the coated glass 100. The low-emissivity coating 120 of Comparative Example 3 includes one visible light blocking layer with a physical thickness of 9 nm, which can significantly reduce the visible light transmittance of the coated glass 100, but TL2/TL1 > 0.4.

In Comparative Examples 4 and 5 and Examples 1 to 12, the low-emissivity coatings 120 each include one or two visible light blocking layers, and the total physical thickness of the visible light blocking layer(s) is greater than 10 nm. The low-emissivity coatings 120 of Comparative Examples 4 to 5 and Examples 1 to 12 can significantly reduce the visible light transmittance of the coated glass 100, allowing the ratio of the visible light transmittance TL2 of the coated glass 100 to the visible light transmittance TL1 of the first glass sheet 110 less than or equal to 0.4, i.e., TL2/TL1 ≤ 0.4. In some examples, the total physical thickness of the visible light blocking layer(s) is greater than or equal to 15 nm, resulting in TL2/TL1 ≤ 0.31, or even TL2/TL1 ≤ 0.25, or even TL2/TL1 ≤ 0.2, further resulting in TL2/TL1 ≤ 0.15, and even further resulting in TL2/TL1 ≤ 0.1. This demonstrates that even when 2.1 transparent glass is used as the first glass sheet 110, the visible light transmittance TL2 of the coated glass 100 can be less than, or even far less than, the visible light transmittance of 2.1 gray glass.

### Comparative Examples 6 to 9 and Examples 13 to 14

Either transparent glass or gray glass, each 2.1 mm thick, was used as the first glass sheet 110 or the second glass sheet 210. Either transparent PVB or gray PVB, each 0.76 mm thick, was used as the adhesive layer. The low-emissivity coatings 120 of Comparative Examples 1 to 4 and Examples 1 to 2 were each deposited onto the surface of the first glass sheet 110 by magnetron sputtering to obtain the coated glass 100 of Comparative Examples 6 to 9 and Examples 13 to 14. The coated glass 100 and the second glass sheet 210 were subjected to a high-temperature heat treatment at a temperature of at least 560°C, then were laminated with the adhesive layer and subjected to an automotive glass production process to obtain the laminated glass 10 of Comparative Examples 6 to 9 and Examples 13 to 14.

The visible light transmittance of the transparent PVB with a thickness of 0.76 mm is 88%, and the visible light transmittance of the gray PVB with a thickness of 0.76 mm is 10%.

The visible light reflectance RL1 of the coated glass 100 of Comparative Examples 6 to 9 and Examples 13 to 14 after the high-temperature heat treatment at a temperature of at least 560°C was measured. The visible light reflectance RL2, Lab of reflected color, visible light transmittance, and emissivity of the laminated glass 10 of Comparative Examples 6 to 9 and Examples 13 to 14 were measured. Measurement results are recorded in Table 5.

Visible light reflectance RL1 of the coated glass 100: Within the wavelength range of 380 nm to 780 nm, from the side of the coated glass 100 where the low-emissivity coating is located, the visible light reflectance RL1 of the coated glass 100 was measured and calculated according to ISO 9050.

Visible light reflectance RL2 of the laminated glass 10: Within the wavelength range of 380 nm to 780 nm, from the side of the coated glass 100 where the low-emissivity coating is located, the visible light reflectance RL2 of the laminated glass 10 was measured and calculated according to ISO 9050.

Lab of reflected color of the laminated glass 10: According to the CIE Lab color model, L, a, b of the color reflected by the laminated glass 10 were measured from the side of the laminated glass 10 where the low-emissivity coating is located. L refers to the lightness value, a refers to the red-green chromaticity value, and b refers to the yellow-blue chromaticity value.

Visible light transmittance of the laminated glass 10: Measured and calculated according to ISO 9050 within the wavelength range of 380nm to 780nm.

Emissivity of the laminated glass 10: From the side of the laminated glass 10 where the low-emissivity coating is located, measured using a Fourier transform infrared spectrometer and calculated/calibrated according to standard EN12898.

**Table 5: Laminated glass of Comparative Examples 6 to 9 and Examples 13 to 14 and the measurement results thereof**

| | Comparativ e Example 6 | Comparativ e Example 7 | Comparativ e Example 8 | Comparativ e Example 9 | Example 13 | Example 14 | |
|---|---|---|---|---|---|---|---|
| Second glass sheet | 2.1 transparent glass | 2.1 transparent glass | 2.1 transparent glass | 2.1 gray glass | 2.1 gray glass | 2.1 transparen t glass | |
| Adhesive layer | gray PVB | gray PVB | gray PVB | transparent PVB | transparen t PVB | transparen t PVB | |
| First glass sheet | 2.1 transparent | 2.1 transparent | 2.1 transparent | 2.1 transparent | 2.1 transparen | 2.1 gray glass | |
| | | glass | glass | glass | glass | t glass | |

| Low-emissivit y coating | | Comparativ e Example 1 | Comparativ e Example 2 | Comparativ e Example 3 | Comparativ e Example 4 | Example 1 | Example 2 |
|---|---|---|---|---|---|---|---|
| Visible light reflectance RL1 of coated glass | | 10.50% | 6.21% | 6.32% | 6.18% | 2.95% | 3.40% |
| Visible light reflectance RL2 of laminated glass | | 9.50% | 2.72% | 5.40% | 6.33% | 2.87% | 3.35% |
| Visible light transmittance of laminated glass | | 8.20% | 8.80% | 6.70% | 7.78% | 9.80% | 8.80% |
| Emissivity of laminated glass | | 0.22 | 0.22 | 0.2 | 0.23 | 0.22 | 0.22 |
| Lab of reflected color of laminated glass | L | 35.6 | 29.3 | 26.5 | 31.8 | 18.9 | 22.5 |
| | a | -6.8 | -1.1 | 10.2 | -0.8 | -1.5 | -1.5 |
| | b | -15.8 | -3.6 | 1.2 | -10.6 | -4.5 | -6.5 |

It can be seen from Table 5 as follows: The laminated glass 10 of Comparative Examples 6 to 9 and Examples 13 to 14 have a visible light transmittance of less than 10%, and an emissivity of less than 0.25, achieving the effects of low visible light transmittance and low emissivity. However, the adhesive layers in the laminated glass 10 of Comparative Examples 6 to 8 all require gray PVB, resulting in relatively high manufacturing costs. The low-emissivity coating of Comparative Example 9 includes a visible light blocking layer with a physical thickness of 17 nm, so that the visible light reflectance RL1 of the coated glass and the visible light reflectance RL2 of the prepared laminated glass 10 are both greater than 6%, which presents interference from specular reflection. Among them, the visible light reflectance RL2 of the laminated glass 10 of Comparative Example 6 is greater than 9%, indicating a serious interference from specular reflection. The "a" value of Lab of the color reflected by the laminated glass of Comparative Example 8 is greater than 10, indicating an intense reddish reflected color.

Compared with Comparative Examples 6 to 9, in Examples 13 to 14, the visible light reflectance RL1 of the coated glass 100 and the visible light reflectance RL2 of the prepared laminated glass 10 are both less than or equal to 4%. In some examples, the visible light reflectance RL1 of the coated glass 100 and the visible light reflectance RL2 of the prepared laminated glass 10 are both less than or equal to 3%, and the reflected color meets visual comfort requirements. In Examples 13 and 14, using transparent PVB and one piece of gray glass enables the laminated glass to have a visible light transmittance of less than 10%, significantly reducing manufacturing costs. Furthermore, in Example 14, colored glass is used as the first glass sheet and transparent glass is used as the second glass sheet, which is beneficial for further incorporating an infrared reflective film on the surface of the second glass sheet or on the adhesive layer, thereby improving the thermal insulation effect of the laminated glass.

### Comparative Example 10 and Examples 15 to 24

Either transparent glass or gray glass, each 2.1 mm thick, was used as the first glass sheet 110 or the second glass sheet 210. Transparent PVB with a thickness of 0.76 mm was used as the adhesive layer. The low-emissivity coatings 120 of Comparative Example 5 and Examples 3 to 12 were each deposited onto the surface of the first glass sheet 110 by magnetron sputtering to obtain the coated glass 100 of Comparative Example 10 and Examples 15 to 24. The coated glass 100 and the second glass sheet 210 were subjected to a high-temperature heat treatment at a temperature of at least 560°C, then were laminated with the adhesive layer and subjected to an automotive glass production process to obtain the laminated glass 10 of Comparative Example 10 and Examples 15 to 24.

The visible light reflectance RL1 of the coated glass 100 of Comparative Example 10 and Examples 15 to 19 after the high-temperature heat treatment at a temperature of at least 560°C was measured. The visible light reflectance RL2, Lab of reflected color, visible light transmittance, and emissivity of the laminated glass 10 of Comparative Example 10 and Examples 15 to 19 were measured. Measurement results are recorded in Table 6.

**Table 6: Laminated glass of Comparative Example 10 and Examples 15 to 19 and measurement results thereof**

| | | Comparative Example 10 | Example 15 | Example 16 | Example 17 | Example 18 | Example 19 |
|---|---|---|---|---|---|---|---|
| Second glass sheet | | 2.1 transparent glass | 2.1 transparent glass | 2.1 gray glass | 2.1 gray glass | 2.1 gray glass | 2.1 gray glass |
| Adhesive layer | | Transparent PVB | Transparent PVB | Transparent PVB | Transparent PVB | Transparent PVB | Transparent PVB |
| First glass | | 2.1 gray | 2.1 gray | 2.1 | 2.1 | 2.1 | 2.1 |
| sheet | | glass | glass | transparent glass | transparent glass | transparent glass | transparent glass |
| Low-emissivity coating | | Comparative Example 5 | Example 3 | Example 4 | Example 5 | Example 6 | Example 7 |
| Visible light reflectance RL1 of coated glass | | 1.73% | 1.58% | 1.98% | 2.28% | 1.85% | 3.78% |
| Visible light reflectance RL2 of laminated glass | | 1.75% | 1.48% | 1.56% | 2.08% | 1.92% | 3.71% |
| Visible light transmittance of laminated glass | | 2.95% | 9.20% | 8.50% | 6.58% | 4.89% | 3.52% |
| Emissivity of laminated glass | | 0.27 | 0.23 | 0.23 | 0.23 | 0.23 | 0.23 |
| Lab of reflected color of laminated glass | L | 18.9 | 12.2 | 12.8 | 17.5 | 17.85 | 22.8 |
| | a | 13.5 | -2.1 | -0.5 | 0.5 | -0.48 | -2.8 |
| | b | -29.5 | -5.4 | -5.9 | -8.6 | -11.5 | -9.6 |

The visible light reflectance RL1 of the coated glass 100 of Examples 20 to 24 after the high-temperature heat treatment at a temperature of at least 560°C was measured. The visible light reflectance RL2, Lab of reflected color, visible light transmittance, and emissivity of the laminated glass 10 of Examples 20 to 24 were measured. Measurement results are recorded in Table 7.

**Table 7: Laminated glass of Examples 20 to 24 and measurement results thereof**

| | | Example 20 | Example 21 | Example 22 | Example 23 | Example 24 |
|---|---|---|---|---|---|---|
| Second glass sheet | | 2.1 gray glass | 2.1 gray glass | 2.1 gray glass | 2.1 gray glass | 2.1 gray glass |
| Adhesive layer | | Transparent PVB | Transparent PVB | Transparent PVB | Transparent PVB | Transparent PVB |
| First glass sheet | | 2.1 transparent glass | 2.1 transparent glass | 2.1 transparent glass | 2.1 transparent glass | 2.1 transparent glass |
| Low-emissivity coating | | Example 8 | Example 9 | Example 10 | Example 11 | Example 12 |
| Visible light reflectance RL1 of coated glass | | 4.58% | 5.08% | 3.26% | 2.72% | 3.86% |
| Visible light reflectance RL2 of laminated glass | | 4.52% | 5.23% | 3.25% | 2.78% | 3.88% |
| Visible light transmittance of laminated glass | | 2.89% | 2.12% | 4.85% | 4.88% | 4.85% |
| Emissivity of laminated glass | | 0.23 | 0.23 | 0.23 | 0.23 | 0.23 |
| Lab of reflected color of laminated glass | L | 25.2 | 29.62 | 17.65 | 15.58 | 17.58 |
| | a | -2.5 | -1.5 | -1.52 | -5.82 | -3.12 |
| | b | -8.4 | -10.8 | -14.5 | -10.5 | -9.5 |

It can be seen from Table 6 and Table 7 as follows: The visible light transmittance of the laminated glass 10 of Comparative Example 10 and Examples 15 to 24 is less than 10%. In some Examples, the visible light transmittance of the laminated glass 10 is even less than or equal to 5%. In some Examples, the visible light transmittance of the laminated glass 10 is even less than or equal to 3%. Furthermore, the emissivity of the laminated glass 10 of Examples 15 to 24 is less than 0.25, achieving the effects of low visible light transmittance and low emissivity.

Although the low-emissivity coating of Comparative Example 5 includes two visible light blocking layers with a total physical thickness greater than 10 nm, its layer structure differs from those of Examples 3 to 12. In Comparative Example 5, the first visible light blocking layer in the low-emissivity coating is located between the transparent conductive oxide layer and the innermost barrier layer, and no low-refractive-index layer is provided as the outermost layer, which causes the "a" value in Lab of the reflected color of the produced laminated glass to be greater than 13, indicating an intense reddish reflected color.

Compared with Comparative Example 10, the visible light reflectance RL1 of the coated glass 100 and the visible light reflectance RL2 of the prepared laminated glass 10 in Examples 15 to 24 are both less than or equal to 5.5%. In some Examples, the visible light reflectance RL1 of the coated glass 100 and the visible light reflectance RL2 of the prepared laminated glass 10 are both less than or equal to 4%. In some Examples, the visible light reflectance RL1 of the coated glass 100 and the visible light reflectance RL2 of the prepared laminated glass 10 are both less than or equal to 3%. In some Examples, the visible light reflectance RL1 of the coated glass 100 and the visible light reflectance RL2 of the prepared laminated glass 10 are both less than or equal to 2%. Furthermore, the reflected color meets visual comfort requirements.

In Examples 15 to 24, using transparent PVB and one piece of gray glass enable the laminated glass to have a visible light transmittance of less than 10%, significantly reducing manufacturing costs. Furthermore, in Example 15, colored glass is used as the first glass sheet and transparent glass is used as the second glass sheet, which is beneficial for further incorporating an infrared reflective film on the surface of the second glass sheet or on the adhesive layer, thereby improving the thermal insulation effect of the laminated glass.

In Examples 15 to 24, the low-emissivity coating includes two visible light blocking layers. As the total physical thickness of the first visible light blocking layer and the second visible light blocking layer increases, the visible light transmittance of the coated glass 100 and the visible light transmittance of the prepared laminated glass 10 in Examples 15 to 24 decrease correspondingly, while the visible light reflectance RL1 of the coated glass 100 and the visible light reflectance RL2 of the prepared laminated glass 10 increase correspondingly. To achieve a visible light transmittance of the prepared laminated glass 10 of less than or equal to 8% and a visible light reflectance RL2 thereof of less than or equal to 5%, the total physical thickness of the first visible light blocking layer and the second visible light blocking layer is in a range from 15 nm to 35 nm. In some Examples, to achieve a visible light transmittance of the prepared laminated glass 10 of less than or equal to 5% and a visible light reflectance RL2 thereof of less than or equal to 4%, the total physical thickness of the first visible light blocking layer and the second visible light blocking layer is in a range from 20 nm to 30 nm.

In Examples 15 to 24, the low-emissivity coating includes two visible light blocking layers. The ratio of the physical thickness of the first visible light blocking layer to the physical thickness of the second visible light blocking layer is (0.875 to 3.6):1. In combination with Examples 18, 22, 23, and 24, it can be seen that when the ratio of the physical thickness of the first visible light blocking layer to the physical thickness of the second visible light blocking layer is (1 to 3):1, the visible light reflectance RL1 of the coated glass 100 and the visible light reflectance RL2 of the prepared laminated glass 10 are both less than or equal to 3%. In an example, the ratio of the physical thickness of the first visible light blocking layer to the physical thickness of the second visible light blocking layer is (1 to 2):1, resulting in the visible light reflectance RL1 of the coated glass 100 and the visible light reflectance RL2 of the prepared laminated glass 10 both less than or equal to 2%.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A coated glass, comprising a first glass sheet and a low-emissivity coating disposed on at least one surface of the first glass sheet, wherein the low-emissivity coating comprises at least one transparent conductive oxide layer and at least one visible light blocking layer, the at least one visible light blocking layer is disposed on a side of the at least one transparent conductive oxide layer away from the first glass sheet, and a total physical thickness of the at least one visible light blocking layer is greater than 10 nm;
a visible light transmittance of the first glass sheet is TL1, a visible light transmittance of the coated glass is TL2, and TL1 and TL2 satisfy that TL2/TL1 is equal to or less than 0.4.

2. The coated glass according to claim 1, wherein a visible light reflectance RL1 of the coated glass on a side where the low-emissivity coating is disposed is less than 6%, or RL1 is equal to or less than 5%, or RL1 is equal to or less than 4%, or RL1 is equal to or less than 3%.

3. The coated glass according to any one of claims 1 to 2, wherein a material of the visible light blocking layer is one or more selected from the group consisting of Ni, Cr, Ti, Nb, Mo, Si, Zr, and W.

4. The coated glass according to any one of claims 1 to 3, wherein the coated glass satisfies at least one of following conditions:
(1) a material of the transparent conductive oxide layer is at least one selected from the group consisting of doped zinc oxide, indium tin oxide, chromium-doped nickel oxide, fluorine-doped tin oxide, and zinc tin oxide, wherein the doped zinc oxide is zinc oxide doped with at least one element selected from the group consisting of aluminum, tungsten, hafnium, gallium, yttrium, niobium, and neodymium;
(2) a thickness of the transparent conductive oxide layer is in a range from 80 nm to 500 nm;
(3) an emissivity of the coated glass on a side where the low-emissivity coating is disposed is less than 0.3.

5. The coated glass according to any one of claims 1 to 4, wherein the low-emissivity coating comprises the transparent conductive oxide layer, the visible light blocking layer, a first high-refractive-index layer, a second high-refractive-index layer, and an outermost low-refractive-index layer that are sequentially stacked outward from a surface of the first glass sheet, and a physical thickness of the visible light blocking layer is in a range from 11 nm to 16 nm.

6. The coated glass according to any one of claims 1 to 4, wherein the low-emissivity coating comprises the transparent conductive oxide layer, a first visible light blocking layer, an intermediate barrier layer, a second visible light blocking layer, a first high-refractive-index layer, a second high-refractive-index layer, and an outermost low-refractive-index layer that are sequentially stacked outward from a surface of the first glass sheet, and a total physical thickness of the first visible light blocking layer and the second visible light blocking layer is in a range from 11 nm to 42 nm.

7. The coated glass according to claim 6, wherein the intermediate barrier layer satisfies at least one of following conditions:
(1) a refractive index of the intermediate barrier layer is greater than or equal to 1.8;
(2) a physical thickness of the intermediate barrier layer is in a range from 10 nm to 70 nm;
(3) a physical thickness of the intermediate barrier layer is greater than both a physical thickness of the first visible light blocking layer and a physical thickness of the second visible light blocking layer;
(4) a material of the intermediate barrier layer is an oxide of at least one element selected from the group consisting of Zn, Sn, Ti, Si, Al, Nb, Zr, Ni, Mg, Cr, In, Ce, W, Mo, Sb, Bi, and Ta, or a nitride or oxynitride of at least one element selected from the group consisting of Si, Al, Zr, B, Y, Ce, La, and Ti.

8. The coated glass according to any one of claims 6 to 7, wherein a ratio of the physical thickness of the first visible light blocking layer to the physical thickness of the second visible light blocking layer is (0.85 to 4):1, or a ratio of the physical thickness of the first visible light blocking layer to the physical thickness of the second visible light blocking layer is (1 to 3):1, or a ratio of the physical thickness of the first visible light blocking layer to the physical thickness of the second visible light blocking layer is (1 to 2):1.

9. The coated glass according to any one of claims 5 to 8, wherein a refractive index of the first high-refractive-index layer is in a range from 1.8 to 2.3, a refractive index of the second high-refractive-index layer is in a range from 2.0 to 2.7, and the refractive index of the second high-refractive-index layer is greater than the refractive index of the first high-refractive-index layer.

10. The coated glass according to any one of claims 5 to 9, wherein a material of the first high-refractive-index layer is a nitride or oxynitride of at least one element selected from the group consisting of Si, Al, Zr, B, Y, Ce, La, and Ti, and a material of the second high-refractive-index layer is an oxide of at least one element selected from the group consisting of Zn, Sn, Ti, Al, Nb, Zr, Ni, Mg, Cr, In, Ce, W, Mo, Sb, Bi, and Ta.

11. The coated glass according to any one of claims 5 to 10, wherein a refractive index of the outermost low-refractive-index layer is less than 1.8, and a material of the outermost low-refractive-index layer is an oxide of at least one element selected from the group consisting of Si, Al, and B, or a fluoride of at least one element selected from Mg, Al, and Ba.

12. The coated glass according to any one of claims 5 to 11, wherein a physical thickness of the first high-refractive-index layer is in a range from 5 nm to 40 nm, a physical thickness of the second high-refractive-index layer is in a range from 5 nm to 50 nm, and a physical thickness of the outermost low-refractive-index layer is in a range from 40 nm to 150 nm.

13. The coated glass according to any one of claims 5 to 12, wherein the low-emissivity coating further comprises an innermost barrier layer located between the surface of the first glass sheet and the transparent conductive oxide layer, a physical thickness of the innermost barrier layer is greater than or equal to 5 nm, and a material of the innermost barrier layer is an oxide of at least one element selected from the group consisting of Zn, Sn, Ti, Si, Al, Nb, Zr, Ni, Mg, Cr, In, Ce, W, Mo, Sb, Bi, and Ta, or a nitride or oxynitride of at least one element selected from the group consisting of Si, Al, Zr, B, Y, Ce, La, and Ti.

14. A laminated glass, comprising a second glass sheet, an adhesive layer, and the coated glass according to any one of claims 1 to 13, wherein the second glass sheet is disposed on a surface of the first glass sheet away from the low-emissivity coating via the adhesive layer.

15. The laminated glass according to claim 14, wherein the laminated glass satisfies at least one of following conditions:
(1) a visible light transmittance of the laminated glass is equal to or less than 10%, or the visible light transmittance of the laminated glass is equal to or less than 5%;
(2) a visible light reflectance of the laminated glass measured from a side where the low-emissivity coating thereof is disposed is equal to or less than 6%, or the visible light reflectance of the laminated glass measured from a side where the low-emissivity coating thereof is disposed is equal to or less than 4%;
(3) in Lab values of a color reflected by the laminated glass measured from a side where the low-emissivity coating thereof is disposed, an "a" value ranges from -6 to 0.5, and a "b" value ranges from -15 to 0.

16. The laminated glass according to any one of claims 14 to 15, wherein the first glass sheet is a transparent glass or a colored glass, a thickness of the first glass sheet is in a range from 0.7 mm to 2.1 mm, and a visible light transmittance of the first glass sheet is in a range from 25% to 95%.

17. The laminated glass according to any one of claims 14 to 16, wherein the second glass sheet is a colored glass, and a visible light transmittance of the second glass sheet is in a range from 10% to 85%.

18. The laminated glass according to any one of claims 14 to 16, wherein the second glass sheet is a transparent glass or an ultra-transparent glass, a total iron content of the transparent glass is less than or equal to 0.1%, a total iron content of the ultra-transparent glass is less than or equal to 0.015%, and a visible light transmittance of the second glass sheet is in a range from 80% to 95%.

19. The laminated glass according to claim 18, further comprising an infrared reflective film, the infrared reflective film comprises at least one metal layer, and the infrared reflective film is disposed on a surface of the second glass sheet facing the adhesive layer or disposed on the adhesive layer.

20. The laminated glass according to any one of claims 14 to 19, wherein the adhesive layer is a transparent thermoplastic polymer film, and a visible light transmittance of the transparent thermoplastic polymer film is greater than or equal to 80%.
